(19) Europäisches Patentamt
European Patent Office
Office européen des brevets

(11) **EP 4 576 012 A1**

(12) **EUROPEAN PATENT APPLICATION**

(43) Date of publication:
**25.06.2025 Bulletin 2025/26**

(21) Application number: **23307256.0**

(22) Date of filing: **19.12.2023**

(51) International Patent Classification (IPC):
**G06V 10/82** *(2022.01)* **G06V 20/40** *(2022.01)*
**G06V 20/52** *(2022.01)*

(52) Cooperative Patent Classification (CPC):
**G06V 10/82; G06V 20/44; G06V 20/46; G06V 20/52**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicants:
• **TOYOTA JIDOSHA KABUSHIKI KAISHA**
**Toyota-shi, Aichi-ken, 471-8571 (JP)**
• **Institut National de Recherche en Informatique et en Automatique**
**78153 Le Chesnay Cedex (FR)**

(72) Inventors:
• **FRANCESCA, Gianpiero**
**1140 BRUSSELS (BE)**

• **GARATTONI, Lorenzo**
**1140 BRUSSELS (BE)**
• **KONG, Quan**
**CHUO-KU, TOKYO, 103-0022 (JP)**
• **MAJHI, Snehashis**
**06902 VALBONNE (FR)**
• **BREMOND, François**
**06902 VALBONNE (FR)**

(74) Representative: **Cabinet Beau de Loménie**
**103, rue de Grenelle**
**75340 Paris Cedex 07 (FR)**

Remarks:
Amended claims in accordance with Rule 137(2) EPC.

(54) **METHOD AND DEVICE FOR DETECTING AN ANOMALY IN A VIDEO**

(57) The present invention relates to a method and device for detecting an anomaly in a video using a machine learning model and, also, to a method for training a machine learning model, a surveillance system, and a computer program.

In particular, the proposed method for detecting an anomaly in a video comprises:
- a step of obtaining a feature map $F_{CTST}$ for temporal segments of the video, wherein this feature map $F_{CTST}$ is obtained using a module $M_{CTST}$ of the machine learning model comprising at least:
◦ a module $M_{LVL1}$ comprising an attention module $M_{CTFA1}$, and
◦ a module $M_{LVL2}$ comprising a temporal down-scaler ($DS_2$), an attention module $M_{CTFA2}$, and a temporal up-scaler ($US_2$),

- a step of obtaining anomaly scores for the temporal segments of the video based on the feature map $F_{CTST}$.

**FIG. 4A**

EP 4 576 012 A1

**Description**

BACKGROUND OF THE INVENTION

1. Field of the Invention

The present invention relates to the field of video anomaly detection. More particularly, the present invention relates to a method and device for detecting an anomaly in a video using a machine learning model and, also, to a method for training a machine learning model, a surveillance system, and a computer program. The present invention is particularly advantageous for implementing autonomous surveillance systems, but such an application is only given as an illustrative example and should not limit the invention.

2. Description of Related Art

Video anomaly detection is a computer-vision task critical to numerous applications, such as autonomous surveillance systems. Typically, autonomous surveillance systems are used to monitor public spaces, factories, *etc.* The objective of such a surveillance system is to detect an anomaly in a video (*e.g.*, an assault, a car accident or an explosion) to enable timely intervention.

The development of machine learning techniques led to considerable improvements in video anomaly detection. Still, implementing autonomous surveillance systems capable of detecting and localizing temporally an anomaly in a video is particularly demanding. Video annotation requires a substantial amount of human effort. It is therefore difficult and costly to collect anomaly videos with precise temporal annotations to train machine learning models for video anomaly detection.

For this reason, it has previously been proposed to train machine learning models using normal and anomaly videos with video-level labels (*i.e.,* using weakly supervised learning). To discriminate between normal events and anomalies, existing solutions rely on conventional temporal modelling schemes, such as Long Short-Term Memory (LSTM) networks, or Temporal Convolutional Networks (TCN), or Graph Convolutional Network (GCN).

However, it has been observed that existing solutions fail to detect both short-duration and long-duration anomalies. The reliability of existing solutions is particularly low with regard to the detection of long-duration anomalies. It is indeed challenging to detect both short-duration and long-duration anomalies. Short-duration anomalies (*e.g.*, a road accident, an explosion) are characterized by sharp changes in the video, whereas long-duration anomalies (*e.g.*, shoplifting, robbery, fighting) are characterized by subtle and progressive changes in the video.

Therefore, there exists a need for a solution that can reliably detect short-duration and long-duration anomalies, and temporally localize these anomalies.

SUMMARY OF THE INVENTION

The present invention has been made in the light of the above problems.

According to an aspect, the present invention provides a (computer-implemented) method for detecting at least one anomaly in a video using a machine learning model, the method comprising:

- a step of obtaining a feature map $F_{CTST}$ for temporal segments of the video, wherein this feature map $F_{CTST}$ is obtained using a module $M_{CTST}$ (referred to as the *cross temporal scale transformer*) of the machine learning model comprising at least:

  o a module $M_{LVL_1}$ comprising an attention module $M_{CTFA_1}$, and
  o a module $M_{LVL_2}$ comprising a temporal down-scaler, an attention module $M_{CTFA_2}$, and a temporal up-scaler,

- a step of obtaining anomaly scores for the temporal segments of the video based on the feature map $F_{CTST}$.

Within the context of the invention, we use the term *"anomaly"* to refer to a class of events considered as abnormal with respect to reference data. For example, the following events can be considered as anomalies: an explosion, a road accident, an assault, a fire. We also use the term *"short-duration anomalies"* to refer to anomalies whose duration is less than or equal to a threshold duration (*e.g.,* 2 seconds), and the term *"long-duration anomalies"* to refer to anomalies whose duration is greater than this threshold duration.

To reliably detect both short-duration and long-duration anomalies, the present invention proposes using a module $M_{CTST}$ - the cross temporal scale transformer - based on a multi-level architecture with different temporal resolutions.

More specifically, each level of the cross temporal scale transformer $M_{CTST}$ is implemented by a module $M_{LVL_k}$

comprising an attention module $M_{CTFAk}$ using a particular temporal resolution (*i.e.*, different levels use different temporal resolutions). Each module $M_{LVLk}$ takes as input a same feature map $F_{VE+OE}$ for temporal segments of the video, and outputs a respective feature map $F_{LVLk}$. Then, the different feature maps $F_{LVL1}$-$F_{LVLn}$ provided by the modules $M_{LVL1}$-$M_{LVLn}$ of the different levels are combined (e.g., concatenated) to obtain the feature map $F_{CTST}$.

By using such a multi-level architecture with different temporal resolutions, the cross temporal scale transformer $M_{CTST}$ allows obtaining a feature map $F_{CTST}$ that captures both subtle information present in the video on a fine temporal scale and contextual information present on a large temporal scale. It encodes the temporal relations between events in the video at multiple temporal scales. Thereby, the cross temporal scale transformer $M_{CTST}$ allows learning discriminative representations for detecting both short-duration and long-duration anomalies.

The feature map $F_{CTST}$ provided by the cross temporal scale transformer $M_{CTST}$ is then used to obtain the anomaly scores for the temporal segments of the video. Since the feature map $F_{CTST}$ is able to capture not only the sharp changes in the video but also the progressive changes in the video, the proposed solution allows detecting reliably both the short-duration and long-duration anomalies.

Existing solutions rely on conventional schemes using a single fixed temporal scale. It follows that they fail to reliably detect both short-duration and long-duration anomalies. In contrast, the proposed solution uses a multi-temporal scale scheme that allows capturing both fine-grained information and contextual information, and allows detecting reliably both short-duration and long-duration anomalies. The results of experiments conducted on standard datasets confirm that the proposed solution provides significant performance gains over existing solutions in terms of anomaly detection reliability.

Therefore, the present invention provides a solution that allows detecting reliably both short-duration and long-duration anomalies, and temporally localizing these anomalies.

According to a particular embodiment, the number of modules $M_{LVLk}$ comprised in the module $M_{CTST}$ equals two or three, these modules $M_{LVLk}$ (*k*=1, 2, or *k=1,* 2, 3) comprising respectively an attention module $M_{CTFAk}$ and using different temporal resolutions.

According to this embodiment, the cross temporal scale transformer $M_{CTST}$ is based on a multi-level architecture with two or three levels using different temporal resolutions. Experimental results show that the detection performance is optimal in terms of detection reliability when the cross temporal scale transformer $M_{CTST}$ comprises two or three levels. This embodiment is therefore particularly advantageous as it contributes to detecting reliably an anomaly in a video.

According to a particular embodiment, a said (each) attention module $M_{CTFAk}$ in the module $M_{CTST}$ comprises at least:

- a plurality of temporal convolutional layers using different dilation rates,
- a multi-head attention module outputting attention maps based on the outputs of the convolutional layers, and
- a combiner module combining the attention maps and the outputs of the convolutional layers.

This embodiment proposes using a specific attention module (referred to as the *cross temporal field attention*), which allows capturing the correlation between neighbor and distant temporal segments of the video.

Specifically, the use of multiple convolutional layers with different dilation rates allows capturing the dependencies between neighbor temporal segments and distant temporal segments. The outputs of the convolutional layers are then inputted as the K, Q, V (key, query, value) matrices into the multi-head attention module. The latter module outputs attention maps that encode the global temporal relationship between events in the video. Finally, the combiner module is used to combine the attention maps and the outputs of the convolutional layers.

By capturing the correlation between neighbor and distant temporal segments, the proposed attention module provides an enhanced encoding of temporal relationships between normal events and anomalies (*i.e.*, for both short-duration and long-duration anomalies). It follows that the proposed cross temporal field attention module allows learning discriminative representations for detecting both short-duration and long-duration anomalies, and contributes to improving the detection reliability of the proposed solution.

It could also be envisaged to implement the proposed solution using a standard transformer in place of the proposed cross temporal field attention module, or other attention modules. However, experimental results show that the proposed cross temporal field attention module significantly improves the reliability of the proposed solution.

According to a particular embodiment, the proposed method comprises:

- a step of obtaining a position embedding $PE_{OE}$ representative of the presence of an anomaly in the temporal segments of the video using a module $M_{OE}$ (referred to as the *outlier embedder*) of the machine learning model.

And, according to this particular embodiment, the feature map $F_{CTST}$ is obtained (using the module $M_{CTST}$) based on the position embedding $PE_{OE}$.

This embodiment proposes using a module $M_{OE}$ - the outlier embedder - to generate a position embedding $PE_{OE}$

in order to guide the cross temporal scale transformer $M_{CTST}$.

In contrast to conventional position embedding, the proposed position embedding $PE_{OE}$ is representative of the presence of an anomaly in the temporal segments of the video. This *anomaly-aware* position embedding $PE_{OE}$ allows the cross temporal scale transformer $M_{CTST}$ to better encode the temporal relations between normal and abnormal temporal segments of the video. This embodiment contributes to improving the detection reliability of the proposed solution.

It could also be envisaged to implement the proposed solution using a standard position embedding (*e.g.,* a sine-cosine temporal position embedding) in place of the proposed anomaly-aware position embedding $PE_{OE}$. However, experimental results show that the proposed anomaly-aware position embedding $PE_{OE}$ provides significant performance gains in terms of detection reliability.

According to a particular embodiment, the step of obtaining the position embedding $PE_{OE}$ comprises:

- a step of obtaining a feature map $\Delta F$ using a module $M_{TRM}$ (referred to as the *temporal regularity module* and comprised in the outlier embedder $M_{OE}$) of the machine learning model based on a difference between: a feature map $F_{VE}$ for the temporal segments of the video, and a temporally-shifted version $F_{VE}^{+}$ of the feature map $F_{VE}$.

And, according to this particular embodiment, the position embedding $PE_{OE}$ is obtained based the feature map $\Delta F$.

In this embodiment, the feature map $\Delta F$ provided by the module $M_{TRM}$ - the temporal regularity module - allows capturing the changes between consecutive temporal segments. This feature map $\Delta F$ hence characterizes the temporal regularity of the temporal segments of the video. The *anomaly-aware* position embedding $PE_{OE}$ is accordingly computed based on the temporal regularity of the temporal segments.

It should be noted that the spatio-temporal features of normal temporal segments have a certain regularity. However, this is not the case for abnormal temporal segments containing anomalies. This embodiment hence allows obtaining a position embedding $PE_{OE}$ that is effectively representative of the presence of an anomaly in the temporal segments of the video. Since the position embedding $PE_{OE}$ is used to guide the cross temporal scale transformer $M_{CTST}$, this embodiment contributes to improving the detection reliability of the proposed solution.

According to a particular embodiment, the step of obtaining the position embedding $PE_{OE}$ further comprises:

- a step of obtaining a feature map $\Delta F^R$ outputted by an auto-encoder module $M_{OCL}$ (referred to as the *one-class learner* and comprised in the outlier embedder $M_{OE}$) of the machine learning model, the auto-encoder module $M_{OCL}$ taking as input the feature map $\Delta F$,
- a step of obtaining the position embedding $PE_{OE}$ based on a difference between: the feature map $\Delta F$, and the feature map $\Delta F^R$.

In this embodiment, an auto-encoder module $M_{OCL}$ - the one-class learner - is used to learn the normal latent space representation in order to generate the position embedding $PE_{OE}$. The one-class learner $M_{OCL}$ is optimized to reconstruct the temporal regularity of normal videos. That is, the one-class learner $M_{OCL}$ is optimized to reconstruct the feature map $\Delta F$ for normal videos only.

For normal temporal segments, the difference between the feature map $\Delta F$ and the feature map $\Delta F^R$ reconstructed by the one-class learner $M_{OCL}$ is to be relatively small. Conversely, for abnormal temporal segments, the difference between the feature map $\Delta F$ and the reconstructed feature map $\Delta F^R$ is to be large. It follows that a temporal segment which deviates significantly from the normal patterns learned by the one class learner $M_{OCL}$ will be assigned a large value in the position embedding $PE_{OE}$.

This embodiment allows obtaining a position embedding $PE_{OE}$ that is effectively representative of the presence of an anomaly in the temporal segments of the video. This contributes to detecting reliably an anomaly in the video.

According to another aspect, the present invention provides a (computer-implemented) method for training a machine learning model for detecting at least one anomaly in a video, the method comprising:

- a step of obtaining anomaly scores for temporal segments of reference videos using a method conforming to the invention for detecting an anomaly, the reference videos being labelled with video-level labels and including normal videos and anomaly videos,
- a step of evaluating a loss function $\mathcal{L}$ using the obtained anomaly scores for the normal reference videos and the anomaly reference videos, and
- a step of updating parameters of the machine learning model to minimize the loss function $\mathcal{L}$.

The present invention proposes training the machine learning model using reference videos with video-level labels (*i.e.,* using weak supervision). Such a reference video is either labelled as normal or abnormal but, in the latter case, the anomaly is not localized temporally in the video.

The proposed training method allows optimizing the machine learning model to detect reliably anomalies in videos and to localize temporally these anomalies, using reference videos without any temporal annotations. This contributes to reducing the human labor required to train the proposed machine learning model for video anomaly detection.

It should also be noted that the trained machine learning model is capable of reliably detecting both short-duration and long-duration anomalies.

The training method may comprise one or more iterations of each of its steps.

<u>According to a particular embodiment,</u> the loss function $\mathcal{L}$ is based on a loss function $\mathcal{L}_D$ (referred to as the *self-rectifying loss function*) comprising:

- a loss function $\mathcal{L}_{\text{ctx}}$ comprising a sum of the anomaly scores obtained for the normal reference videos minus a sum of the anomaly scores obtained for the anomaly reference videos, and

- a loss function $\mathcal{L}_{\text{ins}}$ comprising a difference between: an error associated with the anomaly scores obtained for the anomaly reference videos, and an error associated with the anomaly scores obtained for the normal reference videos.

According to this embodiment, the proposed training method relies on minimizing a loss function $\mathcal{L}_D$ combining the loss functions $\mathcal{L}_{\text{ctx}}$ and $\mathcal{L}_{\text{ins}}$. Specifically, the context-level loss function $\mathcal{L}_{\text{ctx}}$ allows maximizing the separation between normal and anomaly classes at the video-level, and the instance-level loss function $\mathcal{L}_{\text{ins}}$ allows maximizing the separation between normal and anomaly classes at segment-level.

The self-rectifying loss function $\mathcal{L}_D$ ensures optimal separation between normal and anomaly classes under weak-supervision. This embodiment allows enhanced optimization of the machine learning model based on reference videos with only video-level labels.

<u>According to a particular embodiment,</u> the loss function $\mathcal{L}_D$ is evaluated using the following expression:

$$\mathcal{L}_D(\boldsymbol{S_N}, \boldsymbol{S_A}) = \lambda_1 \cdot \mathcal{L}_{\text{ctx}}(\boldsymbol{S_N}, \boldsymbol{S_A}) + \lambda_2 \cdot \mathcal{L}_{\text{ins}}(\boldsymbol{S_N}, \boldsymbol{S_A}),$$

with

$$\mathcal{L}_{\text{ctx}}(\boldsymbol{S_N}, \boldsymbol{S_A}) = \max\left(0, 1 - \sum_{i=1}^{T} S_A^i + \sum_{i=1}^{T} S_N^i\right),$$

and

$$\mathcal{L}_{\text{ins}}(\boldsymbol{S_N}, \boldsymbol{S_A}) = \left\| E_{S_A} - E_{S_N} \right\|,$$

where: $\lambda_1$ and $\lambda_2$ are positive real coefficients, $T$ is a number of temporal segments, $\boldsymbol{S_N} = \left\{ S_N^i \right\}_{1 \le i \le T}$ and $\boldsymbol{S_A} = \left\{ S_A^i \right\}_{1 \le i \le T}$ are the anomaly scores respectively obtained for the temporal segments of the normal reference videos and the anomaly reference videos, and the errors $E_{S_A}$ and $E_{S_N}$ are expressed by:

$$E_{S_A} = \frac{1}{T} \sum_{i=1}^{T} \left( S_A^i - Y_A^i \right)^2, \text{ with } Y_A^i = \begin{cases} 0, \text{ if } S_A^i \le S_{\text{ref}} \\ 1, \text{ if } S_A^i > S_{\text{ref}} \end{cases},$$

$$E_{S_N} = \frac{1}{T} \sum_{i=1}^{T} \left( S_N^i - Y_N^i \right)^2, \text{ with } Y_N^i = 0,$$

with $S_{\text{ref}} = \left( \max_i \left( S_A^i \right) + \min_i \left( S_A^i \right) \right)/2$ .

This embodiment allows achieving optimal separation between normal and anomaly classes under weak-supervision. The self-rectifying loss function $\mathcal{L}_D$ achieves such optimal separation by combining: the loss function $\mathcal{L}_{\text{ctx}}$ to separate classes at the video-level, and the loss function $\mathcal{L}_{\text{ins}}$ to separate classes at the segment-level.

According to a particular embodiment, the loss function $\mathcal{L}$ is based on a loss function $\mathcal{L}_R$ (referred to as the *reconstruction loss function*) comprising a difference between:

- a feature map $\varDelta F_N$ for temporal segments of a normal reference video, and
- a feature map $\varDelta F_N^R$ outputted by an auto-encoder module $M_{OCL}$ (referred to as the *one-class learner*) of the machine learning model, the auto-encoder module $M_{OCL}$ taking as input the feature map $\varDelta F_N$.

The proposed reconstruction loss function $\mathcal{L}_R$ allows the one-class learner $M_{OCL}$ to learn how to reconstruct the temporal regularity of normal videos. It thereby allows the one-class learner module $M_{OCL}$ to efficiently learn the normal latent space representation.

We recall that the one class learner $M_{OCL}$ is used, in particular embodiments, to generate a position embedding $PE_{OE}$ that guides the cross temporal scale transformer $M_{CTST}$. The position embedding $PE_{OE}$ is representative of the presence of an anomaly in the temporal segments of a video.

It follows that reconstruction loss function $\mathcal{L}_R$ enables to optimize the one-class learner $M_{OCL}$ such that the position embedding $PE_{OE}$ is effectively representative of the presence of an anomaly in the temporal segments of a video. Since the position embedding $PE_{OE}$ is used to guide the cross temporal scale transformer $M_{CTST}$, the reconstruction loss function $\mathcal{L}_R$ contributes to optimizing the machine learning model so as to reliably detect an anomaly in a video.

According to a particular embodiment, the loss function $\mathcal{L}$ is based on a weighted sum (with non-zero weights) of the loss function $\mathcal{L}_D$ and the loss function $\mathcal{L}_R$ .

In this embodiment, the proposed loss function $\mathcal{L}$ combines the reconstruction loss function $\mathcal{L}_R$ and the self-rectifying loss function $\mathcal{L}_D$ , and benefits from their respective advantages. It follows that the proposed loss function $\mathcal{L}$ allows optimizing the proposed machine learning model so as to reliably detect anomalies in videos. In particular, experimental results show that the machine learning model, once trained, is capable of reliably detecting both short-duration and long-duration anomalies.

According to another aspect, the present invention provides a machine learning model for detecting an anomaly in a video, the machine learning model comprising:

- a module $M_{CTST}$ (referred to as the *cross temporal scale transformer*) configured to output a feature map $F_{CTST}$ for temporal segments of the video, this module $M_{CTST}$ comprising at least:

    o a module $M_{LVL1}$ comprising an attention module $M_{CTFA1}$, and
    o a module $M_{LVL2}$ comprising a temporal down-scaler, an attention module $M_{CTFA2}$, and a temporal up-scaler,

- a module $M_{DET}$ (referred to as the *detector*) configured to output anomaly scores for the temporal segments of the video based on the feature map $F_{CTST}$ .

According to an embodiment, the machine learning model has been trained using the training method conforming to the invention.

The invention further extends to a computer-readable medium having stored thereon a program for implementing a machine learning model conforming to the invention. In addition, the invention also provides a computer-readable medium having stored thereon data representative of a machine learning model conforming to the invention, such as hyperparameters and/or weights.

According to another aspect, the present invention provides a device for detecting at least one anomaly in a video, the device comprising at least one processor and a memory, the device being configured to implement a machine learning model conforming to the invention.

In an embodiment, the proposed device is configured, for (each) one of the temporal segments of the video, to detect an anomaly in this temporal segment if (and only if) the anomaly score for this temporal segment exceeds a threshold.

The device may further be configured to provide an alarm signal if an anomaly is detected in the video. For example, the alarm signal indicates the detection of an anomaly. It may also comprise the images of the temporal segment associated with the anomaly.

According to another aspect, the present invention provides a surveillance system comprising: a camera for obtaining a video, and a device conforming to the invention for detecting at least one anomaly in the video.

In an embodiment, the surveillance system further comprises an output device configured to output an alarm signal provided by the anomaly detection device. The output device may comprise a display and/or a speaker.

According to another aspect, the present invention provides a computer program comprising instructions which, when the program is executed by at least one processor or a computer, cause said at least one processor or computer to implement a method conforming to the invention for detecting an anomaly in a video, or the method conforming to the invention for training a machine learning model.

It should be noted that the computer program referred to here may use any programming language, and be in the form of source code, object code, or code intermediate between source code and object code, such as in a partially compiled form.

According to another aspect, the invention provides a computer-readable medium having stored thereon the computer program conforming to the invention.

The computer-readable medium referred to here may be any entity or device capable of storing the program and readable by any computer equipment, including a computer. For example, the medium may include a storage medium, or a magnetic storage medium, such as a hard drive. Alternatively, the storage medium may correspond to a computer integrated circuit in which the program is incorporated.

It should be emphasized that the proposed machine learning model, device, surveillance system, computer program, and medium present the advantages described above in relation with the proposed method for detecting an anomaly in a video.

BRIEF DESCRIPTION OF THE DRAWINGS

Features, advantages, and technical and industrial significance of exemplary embodiments of the invention will be described below with reference to the accompanying drawings, in which like reference signs denote like elements, and wherein:

FIG. 1 illustrates the architecture of a surveillance system according to an embodiment of the invention,

FIGS. 2A and 2B illustrate the architecture of a machine learning model and steps of a method for detecting an anomaly in a video according to an embodiment of the invention,

FIGS. 3A and 3B illustrate the architecture of the outlier embedder module of the machine learning model and the steps implemented by this module in the anomaly detection method according to an embodiment of the invention,

FIGS. 4A and 4B illustrate the architecture of the cross temporal scale transformer of the machine learning model and the steps implemented by this module in the anomaly detection method according to an embodiment of the invention,

FIG. 5 illustrates the architecture of the cross temporal field attention module used in the machine learning model according to an embodiment of the invention, and

FIGS. 6 and 7 illustrate steps of a method for training a machine learning model used for detecting an anomaly in a video according to an embodiment of the invention.

DETAILED DESCRIPTION OF EXAMPLE EMBODIMENTS

The present invention is particularly advantageous for implementing a surveillance system. The following description of the invention will refer to this particular application, which is provided only as an illustrative example and should not limit the invention.

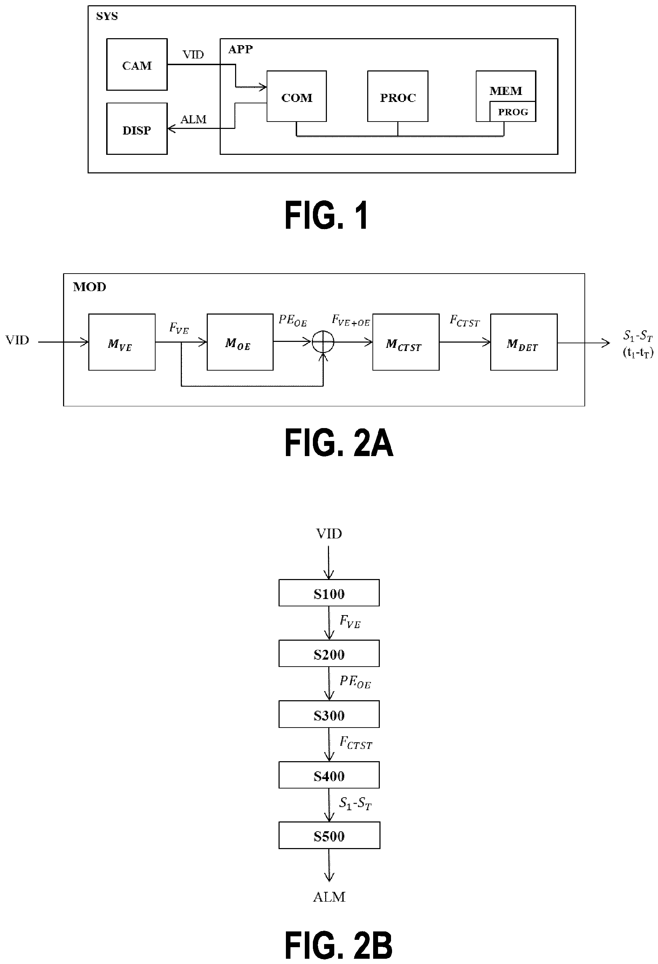

**FIG. 1** illustrates the architecture of a surveillance system according to an embodiment of the invention.

The surveillance system SYS of FIG. 1 comprises: a camera CAM, an anomaly detection device APP, and an output device DISP.

The camera CAM is configured to obtain (*i.e.*, acquire) a video VID. The video VID may comprise one or more anomalies, for instance, short-duration anomalies (*e.g.*, an explosion, a road accident) and/or long-duration anomalies (*e.g.*, an assault, a shoplifting).

The anomaly detection device APP is configured to: detect an anomaly in the video VID, and if an anomaly is detected, provide an alarm signal ALM. The alarm signal ALM indicates that an anomaly has been detected in the video VID and, in addition, may comprise the images of the temporal segment of the video VID associated with the detected anomaly.

The output device DISP is configured to output the alarm signal ALM. For instance, the output device DISP may comprise a display and/or a speaker. This output device DISP allows alerting a user that an anomaly is detected in the video VID. Thereby, timely anomaly prevention and investigation can be carried out.

The anomaly detection device APP comprises at least one processing unit or processor PROC, and at least one memory MEM.

More particularly, the anomaly detection device APP has, according to an embodiment, the hardware architecture of a computer. It may include a processor PROC, a random access memory, a read-only memory MEM, and a non-volatile memory. The memory MEM constitutes a storage medium conforming to the invention. The memory MEM is readable by processor PROC and stores a computer program PROG conforming to the invention. The computer program PROG comprises instructions for implementing the steps of a method conforming to the invention, when the computer program PROG is executed by the processor PROC.

According to the embodiment of FIG. 1, the device APP comprises a communication module COM configured to communicate with the camera CAM and/or the output device DISP. No limitation is attached to the nature of the communication interfaces between the devices APP, CAM, and DISP, which can be wired or wireless, and can implement any protocol known to the skilled person.

The program PROG implements a machine learning model MOD configured to detect an anomaly in a video, and thus the different modules of the model MOD. The architecture of the machine learning model MOD and its operation are described in reference to the following figures.

**FIGS. 2A and 2B** illustrate the architecture of a machine learning model and steps of a method for detecting an anomaly in a video according to an embodiment of the invention.

The architecture of the proposed machine learning model MOD is represented in FIG. 2A. The proposed model comprises (all or part of) the following modules: a visual encoder $M_{VE}$, an outlier embedder $M_{OE}$, a cross temporal scale transformer $M_{CTST}$, and a detector $M_{DET}$.

We describe the functions of these different modules in relation to the steps of the method of FIG. 2B. As shown in this figure, the proposed method for detecting an anomaly in a video comprises (all or part of) the steps S100-S500 implemented by the anomaly detection device APP.

At step S100, the visual encoder $M_{VE}$ takes as input the captured video VID, and outputs a feature map $F_{VE}$ for temporal segments of the video VID. This module is used for extracting spatio-temporal features of the video VID.

Specifically, the visual encoder $M_{VE}$ divides the video VID into T temporal segments (*e.g.*, $T = 32$). We denote $t_1$-$t_T$ the temporal segments of the video VID. These temporal segments are non-overlapping and contiguous, and preferably of the same duration.

Next, the visual encoder $M_{VE}$ outputs the feature map $F_{VE}$ of dimension $T \times D$ (with $T$ the number of temporal segments and $D$ a positive integer).

In example implementations, the visual encoder $M_{VE}$ uses a pre-trained backbone network, such as a Video-swin transformer, or a I3D-ResNet50 network. Implementation details of such backbone networks can found in: Liu et al., "Video swin transformer", IEEE/CVF Conference on Computer Vision and Pattern Recognition, 2022, and in Carreira et al., "Quo vadis, action recognition? a new model and the kinetics dataset", in the IEEE Conference on Computer Vision and Pattern Recognition (CVPR), 2017.

In such example implementations, the visual encoder $M_{VE}$ can be a pre-trained frozen module such that it is not optimized during the training of the proposed model MOD.

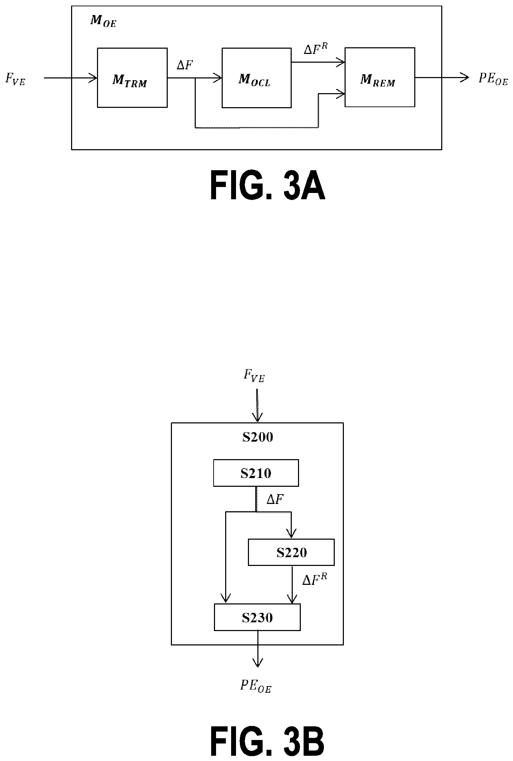

At step S200, the outlier embedder $M_{OE}$ takes as input the feature map $F_{VE}$, and outputs a position embedding $PE_{OE}$. The position embedding $PE_{OE}$ of dimension $T \times 1$ is representative of the presence of an anomaly in each one of the temporal segments $t_1$-$t_T$ of the video VID. The architecture of the outlier embedder $M_{OE}$ and its operation are further detailed below in reference to FIGS. 3A and 3B.

The *anomaly-aware* position embedding $PE_{OE}$ is used to guide the cross temporal scale transformer $M_{CTST}$. As illustrated on FIG. 2A, the position embedding $PE_{OE}$ and the video feature map $F_{VE}$ are added together to obtain a feature map $F_{VE+OE}$ (the position embedding $PE_{OE}$ is duplicated to match the dimension of the feature map $F_{VE}$).

At step S300, the cross temporal scale transformer $M_{CTST}$ takes as input the feature map $F_{VE+OE}$, and outputs a feature map $F_{CTST}$.

This module is based on a multi-level architecture with different temporal resolutions. It allows obtaining a feature map $F_{CTST}$ that captures both subtle information present in the video on a fine temporal scale and contextual information present on a large temporal scale. The dimension of the feature map $F_{CTST}$ is $T \times nm$, with $n$ the number of levels in the cross temporal scale transformer $M_{CTST}$, and m a positive integer.

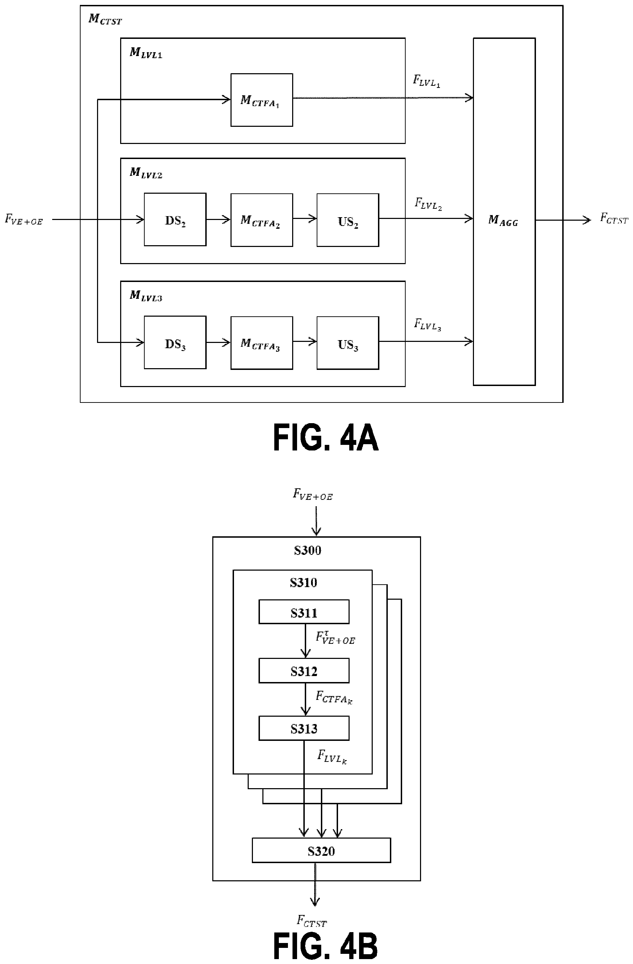

We further detail the architecture of the cross temporal scale transformer $M_{CTST}$ and its operation below in reference to FIGS. 4A and 4B.

At step S400, the detector $M_{DET}$ takes as input the feature map $F_{CTST}$, and outputs anomaly scores $S_1$-$S_T$ for the temporal segments $t_1$-$t_T$ of the video VID (*i.e.*, one anomaly score is obtained for each temporal segment).

For instance, an anomaly score may equal zero for a temporal segment with no anomaly, and may equal one for a temporal segment with an anomaly.

In an example implementation, the detector $M_{DET}$ uses a fully-connected multi-layer perceptron with a sigmoid activation to compute the anomaly scores $S_1$-$S_T$. However, other implementations could be envisaged within the scope of the invention.

At step S500, the anomaly detection device APP determines whether or not an anomaly is present in the video VID.

For example, the device APP can detect an anomaly in one of the temporal segments $t_i$ of the video VID, if the anomaly score $S_i$ for this temporal segment $t_i$ exceeds a detection threshold. The device APP could also detect multiple anomalies in the video VID, if the anomaly scores of several temporal segments exceed the detection threshold.

In a particular embodiment, the detection of an anomaly in the video VID triggers the device APP to provide an alarm signal ALM for alerting of the detected anomaly.

We have described here the overall architecture of the proposed machine learning model MOD for detecting an anomaly in a video VID. We detail below the architecture and operation of the outlier embedder $M_{OE}$. Then, we will detail those of the cross temporal scale transformer $M_{CTST}$.

**FIGS. 3A and 3B** illustrate the architecture of the outlier embedder module of the machine learning model and the steps implemented by this module in the anomaly detection method according to an embodiment of the invention.

As illustrated by FIG. 3A, the outlier embedder $M_{OE}$ comprises (all or part of) the following modules: the temporal regularity module $M_{TRM}$, the one-class learner $M_{OCL}$, and the reconstruction error module $M_{REM}$. We describe these modules in relation to the steps illustrated in FIG. 3B.

We recall that the outlier embedder $M_{OE}$ is configured to output - at step S200 - the position embedding $PE_{OE}$ representative of the presence of an anomaly in the temporal segments $t_1$-$t_T$ of the video VID. To this end, the step S200 comprises (all or part of) the steps S210-S230 illustrated in FIG. 3B.

At step S210, the temporal regularity module $M_{TRM}$ determines a feature map $\Delta F$ based on a difference between the feature map $F_{VE}$ (provided by the visual encoder $M_{VE}$) and a temporally-shifted version $F_{VE}^{+}$ of the feature map $F_{VE}$. This module allows capturing the amount of changes between consecutive temporal segments of the video. The feature map $\Delta F$ is also referred to as the *temporal regularity feature map*.

More precisely, the temporal regularity module $M_{TRM}$ performs a temporal-shift of the feature map $F_{VE}$ (it shifts the values of the feature map along the temporal dimension by one temporal unit). The obtained feature map $F_{VE}$ is also of dimension $T \times D$ (similarly to the feature map $F_{VE}$), the values associated with the first and last temporal segments are respectively padded and truncated. This module then computes the absolute difference between the feature maps $F_{VE}$ and $F_{VE}$ to obtain the feature map $\Delta F$.

At step S220, the one-class learner $M_{OCL}$ takes as input the feature map $\Delta F$, and outputs a reconstructed feature map $\Delta F^R$.

The one-class learner $M_{OCL}$ presents the architecture of an auto-encoder. That is, this module is implemented using a neural network comprising an encoder and a decoder. In example implementations, the one-class learner $M_{OCL}$ may use the architecture of standard temporal auto-encoders, or spatio-temporal auto-encoders, or even a U-Net architecture.

It is important to note that the one-class learner $M_{OCL}$ is optimized to reconstruct the temporal regularity feature map $\Delta F_N$ for normal videos only.

At step S230, the reconstruction error module $M_{REM}$ computes the position embedding $PE_{OE}$ based on a difference between the feature maps $\Delta F$ and $\Delta F^R$.

More specifically, the module $M_{REM}$ computes the error $E^R$ between the input and the output of the one-class learner $M_{OCL}$ (with $E^R$ of dimension $T \times 1$). For the temporal segment $t_i$, the error $E_i^R$ is expressed by:

$$E_i^R = \sum_{j=1}^{D} \left\| \Delta F_{i,j} - \Delta F_{i,j}^R \right\|_2$$

where $\Delta F_i$ denotes the feature vector (of dimension $D$) for temporal segment $t_i$.

The error $E^R$ is then normalized using the softmax function to obtain the position embedding $PE_{OE}$. That is, the position embedding $PE_{OE_i}$ for the temporal segment $t_i$ is obtained using the following expression:

$$PE_{OE_i} = \frac{\exp(E_i^R)}{\sum_{i=1}^{T} \exp(E_i^R)}.$$

Thereby, the outlier embedder $M_{OE}$ allows obtaining a position embedding $PE_{OE}$ representative of the presence of an anomaly in the temporal segments $t_1$-$t_T$ of the video.

As previously mentioned, the one-class learner $M_{OCL}$ is optimized to reconstruct the temporal regularity of normal videos. For normal segments, the difference between the feature map $\Delta F$ and the feature map $\Delta F^R$ reconstructed by the one-class learner $M_{OCL}$ is to be relatively small. Conversely, for abnormal segments, the difference between the feature map $\Delta F$ and the reconstructed feature map $\Delta F^R$ is to be large. It follows that a temporal segment which deviates significantly from the normal patterns learned by the one class learner $M_{OCL}$ is to be associated with a large value in the position embedding $PE_{OE}$.

This *anomaly-aware* position embedding $PE_{OE}$ is used to guide the cross temporal scale transformer $M_{CTST}$. Experimental results show that the proposed position embedding $PE_{OE}$ provides significant performance gains in terms of detection reliability.

We have presented how the outlier embedder $M_{OE}$ computes the position embedding $PE_{OE}$ to guide the cross temporal scale transformer $M_{CTST}$. We now detail the architecture of the cross temporal scale transformer $M_{CTST}$ and its operation in reference to the following figures.

**FIGS. 4A and 4B** illustrate the architecture of the cross temporal scale transformer module of the machine learning model and the steps implemented by this module in the anomaly detection method according to an embodiment of the invention.

As shown in FIG. 4A, the cross temporal scale transformer $M_{CTST}$ has a multi-level architecture, wherein each level is implemented by a module $M_{LVL_k}$. It also comprises an aggregator $M_{AGG}$.

We denote $n$ the number of levels in the cross temporal scale transformer $M_{CTST}$ ($n \geq 2$). This figure represents an embodiment wherein the cross temporal scale transformer $M_{CTST}$ uses three levels ($n = 3$). However, other embodiments could be envisaged wherein other numbers of levels are used (*e.g.*, $n = 2$, or $n > 3$).

We describe below the architecture of the cross temporal scale transformer $M_{CTST}$ in relation to the steps illustrated in FIG. 4B.

We recall that the cross temporal scale transformer $M_{CTST}$ takes as input the feature map $F_{VE+OE}$ (*i.e.*, the feature map $F_{VE}$ infused with the position embedding $PE_{OE}$), and outputs the feature map $F_{CTST}$. To this end, the cross temporal scale transformer $M_{CTST}$ implements the step S300 comprising (all or part of) the steps S310-S320.

At step S310, each level of the cross temporal scale transformer $M_{CTST}$ takes as input the feature map $F_{VE+OE}$, and outputs a feature map $F_{LVL_k}$.

It is important to note that the different levels of the cross temporal scale transformer $M_{CTST}$ process (in parallel) the same feature map $F_{VE+OE}$ using different temporal resolutions.

The first level implemented by the module $M_{LVL1}$ uses the same temporal resolution as the input feature map $F_{VE+OE}$, and allows capturing sharp changes in the video. In contrast, the next levels implemented by modules $M_{LVLk}$ ($k > 1$) use lower temporal resolutions (temporal down-sampling is performed), and allows capturing progressive changes in the video

For the first level, the module $M_{LVL1}$ comprises only an attention module $M_{CTFA1}$. It takes as input the feature map $F_{VE+OE}$, and outputs a feature map $F_{LVL1}$ of dimension $T \times m$ (with $m$ a positive integer).

For the next levels, each module $M_{LVLk}$ (with $k > 1$) comprises: a temporal down-scaler $DS_k$, an attention module $M_{CTFAk}$, and a temporal up-scaler $US_k$. For each module $M_{LVLk}$, the temporal down-sampling and up-sampling is performed using a scaling factor $\tau = k - 1$. Each module $M_{LVLk}$ processes the feature map $F_{VE+OE}$ by implementing the following steps S311-S313.

At step S311, the down-scaler $DS_k$ performs a down-sampling of the feature map $F_{VE+OE}$ to obtain a down-scaled feature map $F_{VE+OE}^{\tau}$ of dimension $T/2^\tau \times D$. In an example implementation, the down-scaler $DS_k$ uses max-pooling with a stride of $2^\tau$.

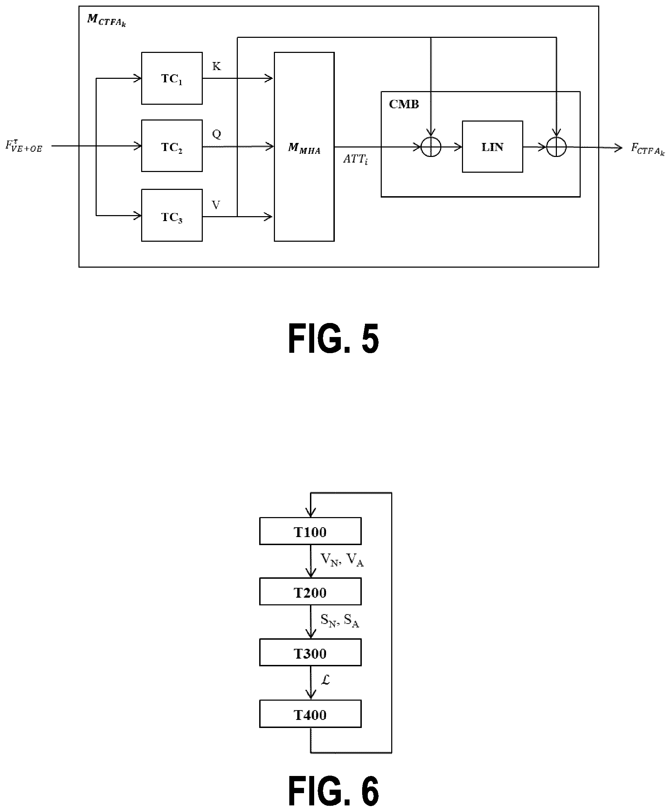

<u>At step S312</u>, the attention module $M_{CTFA_k}$ takes as input the down-scaled feature map $F_{VE+OE}^{\tau}$, and outputs a feature map $F_{CTFA_k}$ of dimension $T/2^\tau \times m$. We detail the architecture of the proposed attention module $M_{CTFA}$ below in reference to FIG. 5.

<u>At step S313</u>, the up-scaler $US_k$ performs an up-sampling of the feature map $F_{CTFA_k}$ to obtain the output feature map $F_{LVL_k}$ of dimension $T \times m$. In an example implementation, the up-scaler $US_k$ uses duplication.

<u>At step S320</u>, the aggregator $M_{AGG}$ combines the feature maps $F_{LVL_1}$-$F_{LVL_n}$ provided by the modules $M_{LVL_1}$-$M_{LVL_n}$ of the different levels to obtain the feature map $F_{CTST}$.

According to a particular embodiment, the aggregator $M_{AGG}$ concatenates the feature maps $F_{LVL_1}$-$F_{LVL_3}$ to obtain the feature map $F_{CTST}$. The dimension of the feature map $F_{CTST}$ is $T \times nm$ (with $T$ the number of temporal segments, $n$ the number of levels in the module $M_{CTST}$, and m the dimension of the feature map provided by each level).

By using a multi-level architecture with different temporal resolutions, the cross temporal scale transformer $M_{CTST}$ allows obtaining a feature map $F_{CTST}$ that captures both subtle information present in the video on a fine temporal scale and contextual information present on a large temporal scale. It allows encoding the temporal relations between events in the video at multiple temporal scales. Thereby, the cross temporal scale transformer $M_{CTST}$ allows learning discriminative representations for detecting both short-duration and long-duration anomalies.

We have described here the cross temporal scale transformer $M_{CTST}$, but without presenting the proposed attention module $M_{CTFA}$. We therefore detail the architecture of this module in reference to the following figure.

**FIG. 5** illustrates the architecture of the cross temporal field attention module used in the machine learning model according to an embodiment of the invention.

This figure details the architecture of the proposed cross temporal field attention module $M_{CTFA_k}$ used by the modules $M_{LVL_k}$ at the different levels of the cross temporal scaler $M_{CTST}$ (with $k = 1,2, ..., n$).

Even though the different levels of the cross temporal scale transformer $M_{CTST}$ uses different temporal resolutions (*i.e.*, different scaling factors $\tau$), the description below of the proposed attention module $M_{CTFA_k}$ applies to these different levels.

As shown in FIG. 5, the proposed cross temporal field attention module $M_{CTFA_k}$ comprises: multiple convolutional layers $TC_1$-$TC_3$, a multi-head attention module $M_{MHA}$, and a combiner CMB.

The convolutional layers $TC_1$-$TC_3$ respectively take as input feature map $F_{VE+OE}^{\tau}$, and process it. The three temporal convolutional layers $TC_1$-$TC_3$ are one-dimensional (1D) temporal convolutions using m filters with a given kernel size (*e.g.,* a kernel size of 3).

It is important to note that the convolutional layers $TC_1$-$TC_3$ use different dilation rates. For instance, the dilations rates of the convolutional layers $TC_1$-$TC_3$ can be respectively set to 1, 2 and 3. The dilation rate of the convolutional layer defines the spacing between values in the convolutional kernel. By using different dilation rates, the convolutional layers $TC_1$-$TC_3$ allows capturing the dependencies between neighbor temporal segments (*e.g.,* $TC_1$ with $d = 1$) and distant temporal segments (*e.g.,* $TC_2$ with $d = 2$ and $TC_3$ with $d = 3$).

<u>The multi-head attention</u> module $M_{MHA}$ takes as input the respective outputs of the convolutional layers $TC_1$-$TC_3$ as the K, Q, V (key, query, value) matrices. This module $M_{MHA}$ uses a standard multi-head attention, which is *per se* known to the skilled person.

The multi-head attention module $M_{MHA}$ then outputs multiple self-attention maps. More precisely, the self-attention map $ATT_i$ of the $i$-th attention head is obtained using the following expression:

$$ATT_i(K, Q, V) = \mathrm{softmax}\left(\frac{QK^T}{\sqrt{m_h}}\right) V.$$

where $m_h$ is the feature dimension in each head.

This multi-head attention module $M_{MHA}$ allows modeling the global temporal relationship between events in the video.

<u>The combiner</u> CMB is configured to combine the self-attention feature maps ATT and the outputs of the convolutional layers $TC_1$-$TC_3$, and obtain the feature map $F_{CTFA_k}$.

In the embodiment of FIG. 5, the combiner CMB first adds together the outputs of the convolutional layers $TC_1$-$TC_3$ and the outputs of the multi-head attention module $M_{MHA}$. The result of the addition is then processed by a linear layer of neurons LIN. Finally, the combiner CMB adds together the output of the convolutional layers $TC_1$-$TC_3$ and the linear layer LIN.

It should be noted that the skip-connections of the proposed combiner CMB allows retaining the original inductive bias present in the input feature map, and that the linear layer allows local feature mixing.

The proposed cross temporal field attention module $M_{CTFA}$ allows capturing the correlation between neighbor and distant temporal segments of the video. It provides an enhanced temporal relation encoding among normal events and anomalies (*i.e.*, for both long and short).

Experimental results show that the proposed cross temporal field attention module $M_{CTFA}$ contributes to improving the anomaly detection reliability of the proposed machine learning model. However, before presenting these experimental results, we describe the proposed method for training this machine learning model MOD.

**FIG. 6** illustrates steps of a method for training a machine learning model used for detecting an anomaly in a video according to an embodiment of the invention.

It is proposed here to train the machine learning model MOD using weak supervision. That is, a set of reference videos with video-level labels is used. Such a reference video is either labelled as a normal video (with no anomaly), or as anomaly video (containing an anomaly) but without temporal localization of the anomaly.

The proposed model MOD is used not only to detect an anomaly in a video but also to localize temporally the anomaly (it provides an anomaly score for each one of the temporal segments of the video). It is therefore important to note that the proposed training method allows, using only reference videos with video-level labels, to optimize the proposed model MOD to temporally localize an anomaly in a video.

The proposed training method does not require any temporal annotations of the reference videos for optimizing the proposed model MOD. This contributes to reducing the human labor required to train the model for video anomaly detection.

As shown in FIG. 6, the proposed training method comprises (all or part of) the following steps T100-T400, and may include one or more iterations of each of these steps.

At step T100, a set of reference videos $V_N$, $V_A$ is obtained. This set includes normal reference videos $V_N$ and anomaly reference videos $V_A$ labelled with video-level labels.

At step T200, anomaly scores $S_N$ and $S_A$ are respectively obtained for the temporal segments of the normal reference videos $V_N$ and the anomaly reference videos $V_A$. The anomaly scores $S_N$, $S_A$ are obtained using the proposed machine learning model MOD (*i.e.*, by implementing the steps S100-S400 previously described).

We denote $S_N = \left\{ S_N^i \right\}_{1 \le i \le T}$ the anomaly scores for the temporal segments of the normal reference videos $V_N$, and $S_A = \left\{ S_A^i \right\}_{1 \le i \le T}$ the anomaly scores for the temporal segments of the anomaly reference videos $V_A$ ($T$ a number of temporal segments).

At the first training iteration, the parameters (*e.g.*, the weights) of the machine learning model MOD can be initialized, for instance, randomly. Such an initialization is *per se* known to the skilled person.

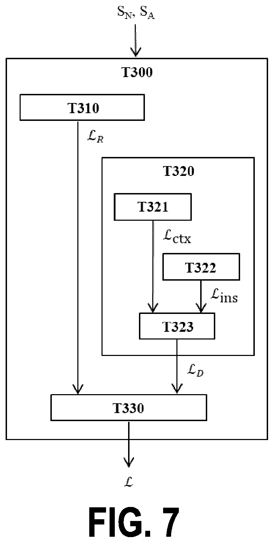

At step T300, a loss function $\mathcal{L}$ is evaluated using the obtained anomaly scores $S_N$ and $S_A$. The implementation of this step is detailed below in reference to FIG. 7.

At step T400, the parameters of the machine learning model MOD are updated to minimize the loss function $\mathcal{L}$.

The proposed loss function $\mathcal{L}$ is used to train the machine learning model MOD in an end-to-end manner. That is, the different modules of the proposed model MOD are jointly optimized to minimize the loss function $\mathcal{L}$ (except for the pre-trained modules).

For example, the proposed model MOD can be implemented using a neural network, and the weights of the neural network can be updated using backpropagation (except for pre-trained modules). Such an update of the weights is *per se* known to the skilled person.

Other parameters of the machine learning model MOD could also be updated to minimize the loss function $\mathcal{L}$, such as the number of neurons, or the number of layers.

We have given above a general description of the proposed method for training the machine learning model MOD. We detail below the proposed loss function $\mathcal{L}$.

**FIG. 7** illustrates steps for evaluating the loss function used in a method training a machine learning model for detecting an anomaly in a video according to an embodiment of the invention.

This figure details the implementation of step T300 previously introduced in which the loss function $\mathcal{L}$ is evaluated. As shown in FIG. 7, the step T300 comprises (all or part of) the following steps T310-T330.

At step T310, a reconstruction loss function $\mathcal{L}_R$ is evaluated using the expression:

$$\mathcal{L}_R(\Delta F_N) = \|\Delta F_N - \Delta F_N^R\|_2.$$

Here, $\Delta F_N$ denotes the feature maps for normal reference videos $V_N$ (provided by the temporal regularity module $M_{TRM}$). And, $\Delta F_N^R$ denotes the feature maps reconstructed by the one-class learner module $M_{OCL}$ when taking as input the feature maps $\Delta F_N$.

It should be emphasized that the reconstruction loss $\mathcal{L}_R$ is evaluated using only normal reference videos $V_N$. This loss function $\mathcal{L}_R$ allows the one-class learner module $M_{OCL}$ to learn how to reconstruct the temporal regularity of normal videos.

At step T320, a self-rectifying loss function $\mathcal{L}_D$ is evaluated using the obtained anomaly scores $S_N$ and $S_A$. To this end, the step T320 comprises the steps T321-T323.

At step T321, a loss function $\mathcal{L}_{ctx}$ is evaluated using the following expression:

$$\mathcal{L}_{ctx}(S_A, S_N) = \max\left(0, 1 - \sum_{i=1}^{T} S_A^i + \sum_{i=1}^{T} S_N^i\right).$$

This loss function $\mathcal{L}_{ctx}$ allows maximizing the separation between normal and anomaly classes at the video-level (context-level). In other words, minimizing the function $\mathcal{L}_{ctx}$ results in minimizing the anomaly scores for normal videos and maximizing the anomaly scores for anomaly videos.

At step T322, a loss function $\mathcal{L}_{ins}$ is evaluated using the following expression:

$$\mathcal{L}_{ins}(S_N, S_A) = \left\|E_{S_A} - E_{S_N}\right\|.$$

The function $\mathcal{L}_{ins}$ is based on a difference between: an error $E_{S_A}$ associated with the anomaly scores $S_A$ obtained for the anomaly reference videos $V_A$, and an error $E_{S_N}$ associated with the anomaly scores $S_N$ obtained for the normal reference videos $V_N$.

The loss function $\mathcal{L}_{ins}$ is proposed to maximize the separation between normal and anomaly classes at the segment-level (instance-level). That is, minimizing the loss function $\mathcal{L}_{ins}$ results in minimizing the anomaly scores $S_N$ for temporal segments without anomalies and maximizing the anomaly scores $S_N$ for temporal segments with anomalies.

To this end, it is proposed to generate a pseudo temporal annotation for each temporal segment (*e.g.*, 0 for normal, and 1 for anomaly). The function $\mathcal{L}_{ins}$ evaluates the errors $E_{S_N}$, $E_{S_A}$ between the obtained anomaly scores $S_N$, $S_A$ and generated pseudo labels $Y_N$, $Y_A$.

Since the normal reference videos $V_N$ contain no anomaly, the pseudo labels $Y_N$ always equals 0. The error $E_{S_N}$ is hence expressed by:

$$E_{S_N} = \frac{1}{T}\sum_{i=1}^{T}\left(S_N^i - Y_N^i\right)^2, \text{ with } Y_N^i = 0.$$

In contrast, the anomaly reference videos $V_A$ contain temporal segments with and without and anomalies. The pseudo labels $Y_A$ are computed by comparing the obtained anomaly scores $S_A$ to a dynamic reference point $S_{ref} = \left(\max_i\left(S_A^i\right) + \min_i\left(S_A^i\right)\right)/2$. The error $E_{S_A}$ is expressed by:

$$E_{S_A} = \frac{1}{T} \sum_{i=1}^{T} \left( S_A^i - Y_A^i \right)^2, \text{ with } Y_A^i = \begin{cases} 0, \text{ if } S_A^i \leq S_{\text{ref}} \\ 1, \text{ if } S_A^i > S_{\text{ref}} \end{cases}.$$

The generation of pseudo labels $Y_A$ for the anomaly reference videos $V_A$ depends on choosing the appropriate reference point $S_{\text{ref}}$. At the first training iteration, the reference point $S_{\text{ref}}$ might be noisy and may lead to generating noisy pseudo labels $Y_A$. Still, by minimizing $\|E_{S_A} - E_{S_N}\|$, the correct pseudo labels $Y_N$ can rectify noisy pseudo labels $Y_A$.

Accordingly, the loss function $\mathcal{L}_{\text{ins}}$ achieves a self-rectification procedure.

At step T323, the self-rectifying loss function $\mathcal{L}_D$ is evaluated based on the loss functions $\mathcal{L}_{\text{ctx}}$ and $\mathcal{L}_{\text{ins}}$ using the following expression:

$$\mathcal{L}_D(S_N, S_A) = \lambda_1 \cdot \mathcal{L}_{\text{ctx}}(S_N, S_A) + \lambda_2 \cdot \mathcal{L}_{\text{ins}}(S_N, S_A),$$

where $\lambda_1$ and $\lambda_2$ are positive real coefficients (e.g., $\lambda_1 = \lambda_2 = 1/2$).

It should be noted that the loss function $\mathcal{L}_D$ ensures optimal separation between normal and anomaly classes at the video-level (context-level) and the segment-level (instance-level). This results in an enhanced optimization of the proposed machine learning model MOD under weak-supervision.

At step T330, the loss function $\mathcal{L}$ is evaluated based on a weighted sum of the reconstruction loss function $\mathcal{L}_R$ and the self-rectifying loss function $\mathcal{L}_D$, as follows:

$$\mathcal{L} = \beta_1 \cdot \mathcal{L}_R + \beta_2 \cdot \mathcal{L}_D,$$

where $\beta_1$ and $\beta_2$ are positive real coefficients (e.g., $\beta_1 = 0.3$ and $\beta_2 = 0.7$).

The proposed loss function $\mathcal{L}$ combines the reconstruction loss function $\mathcal{L}_R$ and the self-rectifying loss function $\mathcal{L}_D$, and benefits from their respective advantages. It follows that the proposed loss function $\mathcal{L}$ allows optimizing the machine learning model MOD to reliably detect anomalies in videos and localize temporally these anomalies, even though the reference videos do not include temporal annotations.

In particular, experimental results show that the proposed model MOD, once trained, is capable of detecting reliably both short-duration and long-duration anomalies. We present below these experimental results.

**Tables 1 and 2** illustrate experimental results related to the proposed machine learning model for detecting an anomaly in a video according to embodiments of the invention.

Here, the performance of the proposed machine learning model MOD is evaluated on the public dataset UCF-Crime. Before presenting the results of these experiments, we first describe some of the implementation details used in these experiments.

The implementation of the proposed model MOD in these experiments is as follows.

The visual encoder module $M_{VE}$ is implemented using the general purpose backbone Video-Swin (cf. previously cited reference). This backbone network is pre-trained on the Kinetics dataset. Videos are divided into 32 non-overlapping temporal segments.

In the outlier embedder $M_{OE}$, different architectures can be used to implement the one-class learner $M_{OCL}$. In particular, for the UCF-Crime dataset, similar performances are achieved with the following architectures: (i) a temporal auto-encoder based on 1D convolutional and deconvolution layers with Rectified Linear Unit (ReLU) activation, and a final layer with sigmoid activation, and (ii) a spatio-temporal auto-encoder based on 1D convolutional and deconvolutional LSTM layers with ReLU activation, and a final layer with sigmoid activation.

For these experiments conducted on the UCF-Crime dataset, three levels are used in the cross temporal scale transformer $M_{CTST}$ ($n = 3$). For the attention module $M_{CTFA}$, 128 filters are used in each of the convolutional layers $TC_1$-$TC_3$. The number of heads in the multi-head attention module $M_{MHA}$ is set to 4, and the number of neural units in the linear layer LIN is set to 256.

The detector $M_{DET}$ is implemented using three fully-connected layers with respectively 128, 32 and 1 units. Each fully-connected layer in the detector $M_{DET}$ is followed by a ReLU activation and a dropout function with a dropout rate of 0.6.

The machine learning model MOD is trained in an end-to-end manner (except for the pre-trained visual encoder

$M_{VE}$). The proposed model is trained using the Adam optimizer with a learning rate of 0.0001. The weighs in the loss function $\mathcal{L}$ are set as follows: $\lambda_1 = \lambda_2 = 0.5$, and $\beta_1 = 0.3$, $\beta_2 = 0.7$.

<u>Table 1</u> presents the results of an ablation study with regard to the different modules of the proposed machine learning model MOD. It evaluates the contribution of each module to the performance of the proposed model MOD. Here, the frame-level Area Under Curve (AUC) is used as the performance indicator.

**Table 1**

| Baseline | $M_{CTST}$ | | Position Embedding | | AUC (%) |
|---|---|---|---|---|---|
| | Vanilla | $M_{CTFA}$ | Vanilla | $M_{OE}$ | UCF-Crime |
| ✓ | - | - | - | - | 79.21 |
| ✓ | ✓ | - | - | - | 81.78 |
| ✓ | - | ✓ | - | - | 82.50 |
| ✓ | - | ✓ | ✓ | - | 83.79 |
| ✓ | - | ✓ | - | ✓ | 86.99 |

The baseline (row 1) corresponds to a machine learning model in which the detector $M_{DET}$ is stacked on the visual encoder $M_{VE}$. This baseline is used to define the initial anomaly detection performance, and the other modules are added afterwards.

The second row of Table 1 corresponds to the use of the cross temporal scale transformer $M_{CTST}$, in which the attention modules are standard transformers (*i.e.*, vanilla transformers). It is important to note that the use of a multi-temporal scale transformer significantly improves the anomaly detection performance of the machine learning model.

Next, the standard transformers are replaced by the proposed cross temporal field attention modules $M_{CTFA}$ (row 3). The resulting performance gain confirms that the proposed attention module $M_{CTFA}$ provides an enhanced modelling of the temporal relationships between events in the video.

The fourth row of Table 1 corresponds to the use of sine-cosine temporal position embedding (*i.e.*, vanilla position embedding) to guide the cross temporal scale transformer $M_{CTST}$. A slight performance gain is obtained.

Finally, the last row of Table 1 corresponds to the use of the proposed position embedding $PE_{OE}$ provided by the outlier embedder $M_{OE}$. This results in a significant performance gain. This confirms that the proposed *anomaly-aware* position embedding $PE_{OE}$ allows the cross temporal scale transformer $M_{CTST}$ to better encode the temporal relationship between events in the video.

The inventors have also carried out similar experiments on the public datasets XD-Violence and IITB-Corridor, and the results are similar to those presented above.

<u>Table 2</u> compares the performance of the proposed machine learning model MOD with regard to a state-of-the-art solution.

Specifically, the considered state-of-the-art solution is the one proposed in Chen et al., "MGFN: Magnitude-Contrastive Glance-and-Focus Network for Weakly-Supervised Video Anomaly Detection", AAAI Conference on Artificial Intelligence, 2023.

Here, the mean AUC (mAUC) is used as the performance indicator. It should also be noted that the performance is evaluated using a K-fold test (with $K = 5$) which provides a robust and unbiased performance evaluation.

**Table 2**

| | mAUC (%) for the UCF-Crime (K-Folds) | | |
|---|---|---|---|
| | overall | long anomalies | short anomalies |
| **Chen *et al*.** | 86.89 | 52.16 | 63.46 |
| **Proposed Solution** | 87.96 | 55.31 | 64.01 |

Table 2 compares the performance of the proposed solution and the state-of-the-art solution in terms of overall detection performance. That is, the detection performance is evaluated on a test set including normal and anomaly videos (considering both short-duration and long-duration anomalies). The experimental results show that the proposed solution achieves a +1,07% performance gain with regard to the solution of Chen *et al*.

This table also compares the performance of the proposed solution and the state-of-the-art solution in terms of short-duration and long-duration anomaly detection. This performance comparison is based on a test set including only anomaly videos. For long-duration anomalies, the proposed solution achieves a significant performance gain of +3.15% with regard to the state-of-the-art solution. And, for short-duration anomalies, the proposed solution also outperforms the solution of Chen *et al.* by +0.55%.

Similar experiments have been conducted on the public datasets XD-Violence and IITB-Corridor, and considering multiple other state-of-the-art solutions. The results of these experiments corroborate the above conclusions.

In conclusion, the results of extensive experiments conducted on various standard datasets demonstrate that the proposed solution achieves significant performance gains over state-of-the-art solutions. It outperforms state-of-the-art solutions in terms of overall anomaly detection reliability, and more specifically in terms of short-duration and long-duration anomaly detection.

**Additional Variants:** Although the present invention has been described above with reference to certain specific embodiments, it will be understood that the invention is not limited by the particularities of these embodiments. Numerous variations, modifications, and developments may be made in these embodiments within the scope of the claims.

**Claims**

1. A computer-implemented method for detecting an anomaly in a video (VID) using a machine learning model (MOD), the method comprising:

   - a step (S300) of obtaining a feature map $F_{CTST}$ for temporal segments ($t_1$-$t_T$) of the video (VID), wherein this feature map $F_{CTST}$ is obtained using a module $M_{CTST}$ of the machine learning model (MOD) comprising at least:

     ○ a module $M_{LVL_1}$ comprising an attention module $M_{CTFA1}$, and
     ○ a module $M_{LVL2}$ comprising a temporal down-scaler ($DS_2$), an attention module $M_{CTFA2}$, and a temporal up-scaler ($US_2$),

   - a step (S400) of obtaining anomaly scores ($S_1$-$S_T$) for the temporal segments ($t_1$-$t_T$) of the video (VID) based on the feature map $F_{CTST}$.

2. The method according to claim 1, wherein the number of modules $M_{LVLk}$ comprised in the module $M_{CTST}$ equals two or three, these modules $M_{LVLk}$ comprising respectively an attention module $M_{CTFAk}$ and using different temporal resolutions.

3. The method according to claim 1 or 2, wherein a said attention module $M_{CTFAk}$ in the module $M_{CTST}$ comprises at least:

   - a plurality of temporal convolutional layers ($TC_1$-$TC_3$) using different dilation rates,
   - a multi-head attention module ($M_{MHA}$) outputting attention maps ($ATT_i$) based on the outputs of the convolutional layers ($TC_1$-$TC_3$), and
   - a combiner module (CMB) combining the attention maps ($ATT_i$) and the outputs of the convolutional layers ($TC_1$-$TC_3$).

4. The method according to any of claims 1 to 3, wherein the method comprises:

   - a step (S200) of obtaining a position embedding $PE_{OE}$ representative of the presence of an anomaly in the temporal segments ($t_1$-$t_T$) of the video (VID) using a module $M_{OE}$ of the machine learning model (MOD),

   and wherein:

   - the feature map $F_{CTST}$ is obtained based on the position embedding $PE_{OE}$.

5. The method according to claim 4, wherein the step (S200) of obtaining the position embedding $PE_{OE}$ comprises:

   - a step of obtaining (S210) a feature map $\Delta F$ using a module $M_{TRM}$ of the machine learning model (MOD) based on a difference between: a feature map $F_{VE}$ for the temporal segments ($t_1$-$t_T$) of the video (VID), and a temporally-shifted version $F_{VE}^+$ of the feature map $F_{VE}$,

   and wherein:

- the position embedding $PE_{OE}$ is obtained (S200) based the feature map $\Delta F$.

6. The method according to claim 5, wherein the step (S200) of obtaining the position embedding $PE_{OE}$ further comprises:

    - a step of obtaining (S220) a feature map $\Delta F^R$ outputted by an auto-encoder module $M_{OCL}$ of the machine learning model (MOD), the auto-encoder module $M_{OCL}$ taking as input the feature map $\Delta F$,
    - a step of obtaining (S230) the position embedding $PE_{OE}$ based on a difference between: the feature map $\Delta F$, and the feature map $\Delta F^R$.

7. A computer-implemented method for training a machine learning model (MOD) for detecting an anomaly in a video (VID), the method comprising:

    - a step of obtaining (T200) anomaly scores ($S_N$, $S_A$) for temporal segments of reference videos ($V_N$, $V_A$) using the method of any of claims 1 to 6, the reference videos ($V_N$, $V_A$) being labelled with video-level labels and including normal videos ($V_N$) and anomaly videos ($V_A$),

    - a step of evaluating (T300) a loss function $\mathcal{L}$ using the obtained anomaly scores ($S_N$, $S_A$) for the normal reference videos ($V_N$) and the anomaly reference videos ($V_A$), and

    - a step of updating (T400) parameters of the machine learning model (MOD) to minimize the loss function $\mathcal{L}$ .

8. The method according to claim 7, wherein the loss function $\mathcal{L}$ is based on a loss function $\mathcal{L}_D$ comprising:

    - a function $\mathcal{L}_{\text{ctx}}$ comprising a sum of the anomaly scores ($S_N$) obtained for the normal reference videos ($V_N$) minus a sum of the anomaly scores ($S_A$) obtained for the anomaly reference videos ($V_A$), and

    - a function $\mathcal{L}_{\text{ins}}$ comprising a difference between: an error associated with the anomaly scores ($S_A$) obtained for the anomaly reference videos ($V_A$), and an error associated with the anomaly scores ($S_N$) obtained for the normal reference videos ($V_N$).

9. The method according to claim 8, wherein the loss function $\mathcal{L}_D$ is evaluated using the following expression:

$$\mathcal{L}_D(S_N, S_A) = \lambda_1 \cdot \mathcal{L}_{\text{ctx}}(S_N, S_A) + \lambda_2 \cdot \mathcal{L}_{\text{ins}}(S_N, S_A),$$

with

$$\mathcal{L}_{\text{ctx}}(S_N, S_A) = \max\left(0, 1 - \sum_{i=1}^{T} S_A^i + \sum_{i=1}^{T} S_N^i\right),$$

and

$$\mathcal{L}_{\text{ins}}(S_N, S_A) = \left\| E_{S_a} - E_{S_n} \right\|,$$

where: $\lambda_1$ and $\lambda_2$ are positive real coefficients, T is a number of temporal segments, $S_N = \left\{S_N^i\right\}_{1 \leq i \leq T}$ and $S_A = \left\{S_A^i\right\}_{1 \leq i \leq T}$ , are the anomaly scores respectively obtained for the temporal segments of the normal reference videos ($V_N$) and the anomaly reference videos ($V_A$), and the errors $E_{S_A}$ and $E_{S_N}$ are expressed by:

$$E_{S_A} = \frac{1}{T}\sum_{i=1}^{T}\left(S_A^i - Y_A^i\right)^2, \text{ with } Y_A^i = \begin{cases} 0, \text{ if } S_A^i \leq S_{\text{ref}} \\ 1, \text{ if } S_A^i > S_{\text{ref}} \end{cases},$$

$$E_{S_N} = \frac{1}{T}\sum_{i=1}^{T}\left(S_N^i - Y_N^i\right)^2, \text{ with } Y_N^i = 0,$$

with $S_{\text{ref}} = \left(\max_i\left(S_A^i\right) + \min_i\left(S_A^i\right)\right)/2$ .

**10.** The method according to any of claims 7 to 9, wherein the loss function $\mathcal{L}$ is based on a loss function $\mathcal{L}_R$ comprising a difference between:

- a feature map $\Delta F_N$ for temporal segments of a normal reference video ($V_N$), and

- a feature map $\Delta F_N^R$ outputted by an auto-encoder module $M_{OCL}$ of the machine learning model (MOD), the auto-encoder module $M_{OCL}$ taking as input the feature map $\Delta F_N$.

**11.** The method according to claims 8 and 10, wherein the loss function $\mathcal{L}$ is based on a weighted sum of the loss function $\mathcal{L}_D$ and the loss function $\mathcal{L}_R$ .

**12.** A machine learning model (MOD) for detecting an anomaly in a video (VID), the machine learning model (MOD) comprising:

- a module $M_{CTST}$ configured to output a feature map $F_{CTST}$ for temporal segments ($t_1$-$t_T$) of the video (VID), this module $M_{CTST}$ comprising at least:

  ○ a module $M_{LVL1}$ comprising an attention module $M_{CTFA1}$, and
  ○ a module $M_{LVL2}$ comprising a temporal down-scaler (DS$_2$), an attention module $M_{CTFA2}$, and a temporal up-scaler (US$_2$),

- a module $M_{DET}$ configured to output anomaly scores (S$_1$-S$_T$) for the temporal segments ($t_1$-$t_T$) of the video (VID) based on the feature map $F_{CTST}$.

**13.** A device (APP) for detecting an anomaly in a video (VID), the device (APP) comprising at least one processor (PROC) and a memory (MEM), the device (APP) being configured to implement a machine learning model (MOD) according to claim 12.

**14.** A surveillance system (SYS) comprising:

- a camera (CAM) for obtaining a video (VID), and
- a device (APP) according to claim 13 for detecting an anomaly in the video (VID).

**15.** A computer program (PROG) comprising instructions which, when the program (PROG) is executed by at least one processor (PROC), cause said at least one processor (PROC) to implement the method according to any of claims 1 to 6, or the method according to any of claims 7 to 11.

**Amended claims in accordance with Rule 137(2) EPC.**

**1.** A computer-implemented method for detecting an anomaly in a video (VID) using a machine learning model (MOD), the method comprising:

- a step (S300) of obtaining a feature map $F_{CTST}$ for temporal segments ($t_1$-$t_T$) of the video (VID),

wherein this feature map $F_{CTST}$ is obtained using a module $M_{CTST}$ of the machine learning model (MOD) comprising at least:

o a module $M_{LVL_1}$ comprising an attention module $M_{CTFA_1}$, and
o a module $M_{LVL_2}$ comprising a temporal down-scaler (DS$_2$), an attention module $M_{CTFA_2}$, and a temporal up-scaler (US$_2$),

wherein said modules $M_{LVL1}$ and $M_{LVL2}$:

o take as input a same feature map $F_{VE+OE}$ for temporal segments of the video obtained (S100) using a visual encoder $M_{VE}$; and
o output a respective feature map $F_{LVL_1}$, $F_{LVL_2}$, said feature map $F_{CTST}$ being obtained by a combination of said respective feature maps $F_{LVL_1}$, $F_{LVL_2}$, and

wherein said attention modules $M_{CTFA_1}$, $M_{CTFA_2}$ respectively use different temporal resolutions, and wherein:

o said temporal down-scaler (DS$_2$) performs (S311) a down-sampling of the feature map $F_{VE+OE}$ of dimension $T \times D$ to obtain a down-scaled feature map $F^1_{VE+OE}$ of dimension $T/2^\tau \times D$, with $T$ the number of temporal segments, $\tau$ a scaling factor, and D a positive integer;

o said attention module $M_{CTFA_2}$ takes as input (S312) the down-scaled feature map $F^1_{VE+OE}$, and outputs a feature map $F_{CTFA_2}$ of dimension $T/2^\tau \times m$, with m a positive integer;
o said temporal up-scaler (US$_2$) performs (S313) an up-sampling of the feature map $F_{CTFA_2}$ to obtain the output feature map $F_{LVL_2}$ of dimension $T \times m$;

- a step (S400) of obtaining, using a fully-connected multi-layer perceptron with a sigmoid activation, anomaly scores ($S_1$-$S_T$) for the temporal segments ($t_1$-$t_T$) of the video (VID) based on the feature map $F_{CTST}$.

2. The method according to claim 1, wherein the number of modules $M_{LVL_k}$ comprised in the module $M_{CTST}$ equals two or three, these modules $M_{LVL_k}$ comprising respectively an attention module $M_{CTFA_k}$ and using different temporal resolutions.

3. The method according to claim 1 or 2, wherein a said attention module $M_{CTFA_k}$ in the module $M_{CTST}$ comprises at least:

- a plurality of temporal convolutional layers (TC$_1$-TC$_3$) using different dilation rates,
- a multi-head attention module ($M_{MHA}$) outputting attention maps ($ATT_i$) based on the outputs of the convolutional layers (TC$_1$-TC$_3$), and
- a combiner module (CMB) combining the attention maps ($ATT_i$) and the outputs of the convolutional layers (TC$_1$-TC$_3$).

4. The method according to any of claims 1 to 3, wherein the method comprises:

- a step (S200) of obtaining a position embedding $PE_{OE}$ representative of the presence of an anomaly in the temporal segments ($t_1$-$t_T$) of the video (VID) using a module $M_{OE}$ of the machine learning model (MOD), and wherein:

- the feature map $F_{CTST}$ is obtained based on the position embedding $PE_{OE}$.

5. The method according to claim 4, wherein the step (S200) of obtaining the position embedding $PE_{OE}$ comprises:

- a step of obtaining (S210) a feature map $\Delta F$ using a module $M_{TRM}$ of the machine learning model (MOD) based on a difference between: a feature map $F_{VE}$ for the temporal segments ($t_1$-$t_T$) of the video (VID), and a temporally-shifted version $F^+_{VE}$ of the feature map $F_{VE}$, and wherein:

- the position embedding $PE_{OE}$ is obtained (S200) based the feature map $\varDelta F$.

6. The method according to claim 5, wherein the step (S200) of obtaining the position embedding $PE_{OE}$ further comprises:

- a step of obtaining (S220) a feature map $\varDelta F^R$ outputted by an auto-encoder module $M_{OCL}$ of the machine learning model (MOD), the auto-encoder module $M_{OCL}$ taking as input the feature map $\varDelta F$,
- a step of obtaining (S230) the position embedding $PE_{OE}$ based on a difference between: the feature map $\varDelta F$, and the feature map $\varDelta F^R$.

7. A computer-implemented method for training a machine learning model (MOD) for detecting an anomaly in a video (VID), the method comprising:

- a step of obtaining (T200) anomaly scores ($S_N$, $S_A$) for temporal segments of reference videos ($V_N$, $V_A$) using the method of any of claims 1 to 6, the reference videos ($V_N$, $V_A$) being labelled with video-level labels and including normal videos ($V_N$) and anomaly videos ($V_A$),

- a step of evaluating (T300) a loss function $\mathcal{L}$ using the obtained anomaly scores ($S_N$, $S_A$) for the normal reference videos ($V_N$) and the anomaly reference videos ($V_A$), and

- a step of updating (T400) parameters of the machine learning model (MOD) to minimize the loss function $\mathcal{L}$.

8. The method according to claim 7, wherein the loss function $\mathcal{L}$ is based on a loss function $\mathcal{L}_D$ comprising:

- a function $\mathcal{L}_{ctx}$ comprising a sum of the anomaly scores ($S_N$) obtained for the normal reference videos ($V_N$) minus a sum of the anomaly scores ($S_A$) obtained for the anomaly reference videos ($V_A$), and

- a function $\mathcal{L}_{ins}$ comprising a difference between: an error associated with the anomaly scores ($S_A$) obtained for the anomaly reference videos ($V_A$), and an error associated with the anomaly scores ($S_N$) obtained for the normal reference videos ($V_N$).

9. The method according to claim 8, wherein the loss function $\mathcal{L}_D$ is evaluated using the following expression:

$$\mathcal{L}_D(S_N, S_A) = \lambda_1 \cdot \mathcal{L}_{ctx}(S_N, S_A) + \lambda_2 \cdot \mathcal{L}_{ins}(S_N, S_A),$$

with

$$\mathcal{L}_{ctx}(S_N, S_A) = \max\left(0, 1 - \sum_{i=1}^{T} S_A^i + \sum_{i=1}^{T} S_N^i\right),$$

and

$$\mathcal{L}_{ins}(S_N, S_A) = \left\| E_{S_a} - E_{S_n} \right\|,$$

where: $\lambda_1$ and $\lambda_2$ are positive real coefficients, $T$ is a number of temporal segments,

$S_N = \left\{S_N^i\right\}_{1 \leq i \leq T}$ and $S_A = \left\{S_A^i\right\}_{1 \leq i \leq T}$ are the anomaly scores respectively obtained for the temporal segments of the normal reference videos ($V_N$) and the anomaly reference videos ($V_A$), and the errors $E_{S_A}$ and $E_{S_N}$ are expressed by:

$$E_{S_A} = \frac{1}{T} \sum_{i=1}^{T} \left(S_A^i - Y_A^i\right)^2, \text{ with } Y_A^i = \begin{cases} 0, \text{ if } S_A^i \leq S_{ref} \\ 1, \text{ if } S_A^i > S_{ref} \end{cases},$$

$$E_{S_N} = \frac{1}{T} \sum_{i=1}^{T} \left( S_N^i - Y_N^i \right)^2, \text{ with } Y_N^i = 0,$$

with

$$S_{\text{ref}} = \left( \max_i \left( S_A^i \right) + \min_i \left( S_A^i \right) \right) / 2.$$

**10.** The method according to any of claims 7 to 9, wherein the loss function $\mathcal{L}$ is based on a loss function $\mathcal{L}_R$ comprising a difference between:

- a feature map $\Delta F_N$ for temporal segments of a normal reference video ($V_N$), and

- a feature map $\Delta F_N^R$ outputted by an auto-encoder module $M_{OCL}$ of the machine learning model (MOD), the auto-encoder module $M_{OCL}$ taking as input the feature map $\Delta F_N$.

**11.** The method according to claims 8 and 10, wherein the loss function $\mathcal{L}$ is based on a weighted sum of the loss function $\mathcal{L}_D$ and the loss function $\mathcal{L}_R$.

**12.** A machine learning model (MOD) for detecting an anomaly in a video (VID), the machine learning model (MOD) comprising:

- a module $M_{CTST}$ configured to output a feature map $F_{CTST}$ for temporal segments ($t_1$-$t_T$) of the video (VID), this module $M_{CTST}$ comprising at least:

o a module $M_{LVL1}$ comprising an attention module $M_{CTFA_1}$, and
o a module $M_{LVL2}$ comprising a temporal down-scaler (DS$_2$), an attention module $M_{CTFA_2}$, and a temporal up-scaler (US$_2$),

wherein said modules $M_{LVL1}$ and $M_{LVL2}$ are configured to:

o take as input a same feature map $F_{VE+OE}$ for temporal segments of the video obtained (S100) using a visual encoder $M_{VE}$; and

○ output a respective feature map $F_{LVL1}$, $F_{LVL2}$, said feature map $F_{CTST}$ being obtained by a combination of said respective feature maps $F_{LVL1}$, $F_{LVL2}$, and
wherein said attention modules $M_{CTFA_1}$, $M_{CTFA_2}$ respectively use different temporal resolutions, and wherein:
o said temporal down-scaler (DS$_2$) is configured to perform (S311) a down-sampling of the feature map $F_{VE+OE}$ of dimension $T \times D$ to obtain a down-scaled feature map $F_{VE+OE}^1$ of dimension $T/2^\tau \times D$, with $T$ the number of temporal segments, $\tau$ a scaling factor, and D a positive integer;
o said attention module $M_{CTFA_2}$ is configured to take as input (S312) the down-scaled feature map $F_{VE+OE}^1$, and to output a feature map $F_{CTFA_2}$ of dimension $T/2^\tau \times m$, with m a positive integer;
o said temporal up-scaler (US$_2$) is configured to perform (S313) an up-sampling of the feature map $F_{CTFA_2}$ to obtain the output feature map $F_{LVL2}$ of dimension $T \times m$;

- a module $M_{DET}$ configured, using a fully-connected multi-layer perceptron with a sigmoid activation, to output anomaly scores (S$_1$-S$_T$) for the temporal segments ($t_1$-$t_T$) of the video (VID) based on the feature map $F_{CTST}$.

**13.** A device (APP) for detecting an anomaly in a video (VID), the device (APP) comprising at least one processor (PROC) and a memory (MEM), the device (APP) being configured to implement a machine learning model (MOD) according to claim 12.

**14.** A surveillance system (SYS) comprising:

- a camera (CAM) for obtaining a video (VID), and
- a device (APP) according to claim 13 for detecting an anomaly in the video (VID).

**15.** A computer program (PROG) comprising instructions which, when the program (PROG) is executed by at least one processor (PROC), cause said at least one processor (PROC) to implement the method according to any of claims 1 to 6, or the method according to any of claims 7 to 11.

EP 4 576 012 A1

FIG. 1

FIG. 2A

FIG. 2B

$M_{OE}$

$F_{VE}$ → $M_{TRM}$ —$\Delta F$→ $M_{OCL}$ —$\Delta F^R$→ $M_{REM}$ → $PE_{OE}$

# FIG. 3A

$F_{VE}$

↓

S200

S210

↓ $\Delta F$

S220

↓ $\Delta F^R$

S230

↓

$PE_{OE}$

# FIG. 3B

## FIG. 4A

## FIG. 4B

## FIG. 5

## FIG. 6

FIG. 7

Europäisches
Patentamt

European
Patent Office

Office européen
des brevets

# EUROPEAN SEARCH REPORT

Application Number

EP 23 30 7256

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | YUAN HONGCHUN ET AL: "TransAnomaly: Video Anomaly Detection Using Video Vision Transformer", IEEE ACCESS, IEEE, USA, vol. 9, 30 August 2021 (2021-08-30), pages 123977-123986, XP011878192, DOI: 10.1109/ACCESS.2021.3109102 [retrieved on 2021-09-13] sec. III; * abstract; figures 1, 2 * | 1-15 | INV. G06V10/82 G06V20/40 G06V20/52 |
| A | YUJUN KIM: "Video anomaly detection using Cross U-Net and cascade sliding window", KING SAUD UNIVERSITY JOURNAL. COMPUTER AND INFORMATION SCIENCES, vol. 34, no. 6, 1 June 2022 (2022-06-01), pages 3273-3284, XP093167095, SA ISSN: 1319-1578, DOI: 10.1016/j.jksuci.2022.04.011 Retrieved from the Internet: URL:https://pdf.sciencedirectassets.com/28 0416/1-s2.0-S1319157822X00074/1-s2.0-S1319 157822001392/main.pdf?X-Amz-Security-Token =IQoJb3JpZ2luX2VjEF0aCXVzLWVhc3QtMSJIMEYCI QDLBq4ZIPZofpfOH/BsBmr67N8RY6bB3hHxOfoKHiz cLgIhAIjfxJqFcfp9XJt2zlSRUMKbDs1/qpzub6xC6 IzODbQCKrwFCNb//////////wEQBRoMMDU5MDAzNTQ 2ODY1Igxu C> * abstract * | 1-15 | |

TECHNICAL FIELDS
SEARCHED (IPC)

G06V

The present search report has been drawn up for all claims

| Place of search | Date of completion of the search | Examiner |
|---|---|---|
| The Hague | 29 May 2024 | Mitzel, Dennis |

EPO FORM 1503 03.82 (P04C01)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **LIU et al.** Video swin transformer. *IEEE/CVF Conference on Computer Vision and Pattern Recognition*, 2022
- **CARREIRA et al.** Quo vadis, action recognition? a new model and the kinetics dataset. *IEEE Conference on Computer Vision and Pattern Recognition (CVPR)*, 2017
- **CHEN et al.** MGFN: Magnitude-Contrastive Glance-and-Focus Network for Weakly-Supervised Video Anomaly Detection. *AAAI Conference on Artificial Intelligence*, 2023